# EUROPEAN PATENT SPECIFICATION

(11) **EP 3 088 278 B1**
(45) Date of publication and mention of the grant of the patent: **28.11.2018**
(21) Application number: 16167036.9
(22) Date of filing: 26.04.2016
(51) Int. Cl.: B62D 5/04, F16H 55/24

(54) **WORM REDUCTION GEAR AND STEERING SYSTEM**
SCHNECKENREDUKTIONSGETRIEBE UND LENKSYSTEM
ENGRENAGE DE RÉDUCTION À VIS SANS FIN ET SYSTÈME DE DIRECTION

(30) Priority: 30.04.2015 JP 2015093285
(43) Date of publication of application: 02.11.2016
(73) Proprietor: JTEKT Corporation, Chuo-ku, Osaka-shi Osaka 542-8502 (JP)
(72) Inventor: KAWAMURA, Naofumi, Osaka-shi, Osaka 542-8502 (JP)
(74) Representative: Winter, Brandl, Fürniss, Hübner, Röss, Kaiser, Polte - Partnerschaft mbB

(56) References cited:
- DE-A1-102004 054 510
- JP-A- 2002 067 992
- JP-A- 2015 003 611
- US-A1- 2014 083 794
- US-A1- 2015 107 384

## Description

### BACKGROUND OF THE INVENTION

### 1. Field of the Invention

The invention relates to a worm reduction gear and a steering system.

### 2. Description of the Related Art

In a worm reduction gear in an electric power steering system that transmits a rotating output from an electric motor to a steering shaft, a worm shaft and a worm wheel are meshed with each other. The worm shaft is coupled to the electric motor so as to be driven by the electric motor. The worm wheel is coupled to the steering shaft. Various structures have been proposed in which a bearing supporting an end of the worm shaft on the opposite side from the electric motor is biased toward the worm wheel by a bias member, in order to suppress possible backlash between the worm shaft and the worm wheel (see, for example, Japanese Patent Application Publication No. 2002-67992 (JP 2002-67992 A) and Japanese Patent Application Publication No. 2015-3611 (JP 2015-3611 A).

In JP 2002-67992 A, an end of a housing that is opposite to the electric motor is closed. Thus, a bias mechanism including the bias member is precluded from being assembled into the housing through the end thereof that is away from the electric motor. This makes assembly of an electric power steering system difficult and inefficient. In JP 2015-3611 A, an end of a housing is open through an opening at this end. Consequently, a bias mechanism can be assembled into the housing through this end. However, an end cover is needed which closes the opening at this end of the housing, leading to an increased number of components of the worm reduction gear.

From documents US 2015 107384 A1, DE 10 2004 054510 A1 and US 2014 083794 A1 a speed reducer for power steering with the features of the preamble of claim 1 has become known, respectively.

### SUMMARY OF THE INVENTION

An object of the invention is to provide a worm reduction gear and an electric power steering system that can be more easily and efficiently assembled and that suppresses an increase in the number of components.

A worm reduction gear according to an aspect of the invention includes: a housing in which a holding hole with an opening at one end of the holding hole is formed; a worm shaft including a first end coupled to an electric motor and a second end positioned on the opposite side of the worm shaft from the first end in an axial direction, the worm shaft being housed in the housing; a worm wheel that meshes with the worm shaft; a first bearing held by the housing and supporting the first end such that the first end is rotatable; a second bearing that supports the second end such that the second end is rotatable; a bias member that directly or indirectly biases the second end in such a direction that the second end approaches the worm wheel; and a guide member including a ring portion fitted in the holding hole in the housing to guide movement of the second end of the worm shaft and a closing portion that closes an end of the ring portion and the opening of the holding hole.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic diagram depicting a general configuration of an electric power steering system to which a worm reduction gear in a first embodiment of the invention is applied;
FIG. 2 is a sectional view of an important part of the worm reduction gear in the first embodiment;
FIG. 3 is an exploded perspective view of an important part of the worm reduction gear in the first embodiment;
FIG. 4A is a side view of a guide member in the first embodiment, FIG. 4B is a sectional view of the guide member in the first embodiment, FIG. 4C is a sectional view taken along line E-E in FIG. 4A, and FIG. 4D is a sectional view taken along line F-F in FIG. 4A;
FIG. 5 is a schematic sectional view of an important part of the worm reduction gear during an assembly process in the first embodiment;
FIG. 6 is a sectional view taken along line IV-IV in FIG. 2;
FIG. 7 is a sectional view taken along line V-V in FIG. 2; and
FIG. 8 is a schematic sectional view of a bias portion according to a second embodiment of the invention.

### DETAILED DESCRIPTION OF EMBODIMENTS

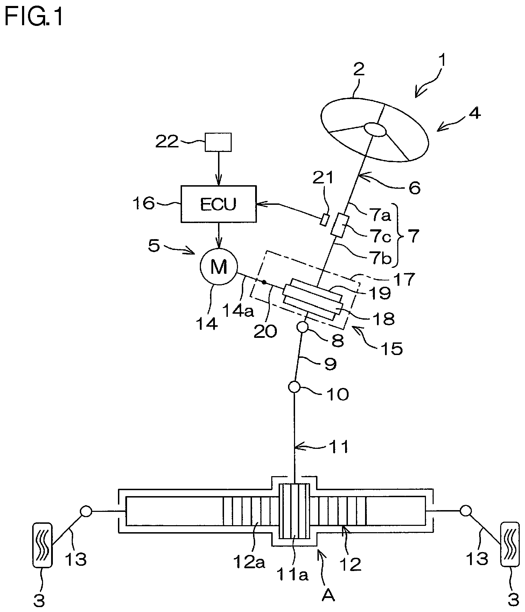

Embodiments of the invention will be described below in accordance with the drawings. An electric power steering system including a worm reduction gear in a first embodiment of the invention will be described using FIG. 1. FIG. 1 is a schematic diagram depicting a general configuration of the electric power steering system including the worm reduction gear in the first embodiment of the invention.

An electric power steering system 1 includes a steering mechanism 4 and a steering operation mechanism A to steer steered wheels 3 based on a driver's operation of a steering wheel (steering member). The steering mechanism 4 includes an assist mechanism 5 that assists the driver's steering operation. The steering mechanism 4 has an input shaft 7a, an output shaft 7b, an intermediate shaft 9, and a pinion shaft 11. The input shaft 7a is coupled to the steering wheel 2 (steering member). The output shaft 7b is coupled to the input shaft 7a via a torsion bar 7c. The intermediate shaft 9 is coupled to the pinion shaft 11 with a pinion 11a via a universal joint 8.

The steering operation mechanism A includes a rack shaft 12 and tie rods 13. The rack shaft 12 has a rack 12a meshed with the pinion 11a. Each of the tie rods 13 is coupled to the rack shaft 12 at one end of the tie rod 13 and to the corresponding steered wheel 3 at the other end of the tie rod 13. When the steering wheel 2 rotates in accordance with the driver's operation, the pinion shaft 11 rotates via the input shaft 7a, the output shaft 7b, and the intermediate shaft 9. Rotation of the pinion shaft 11 is converted into reciprocating motion of the rack shaft 12 in an axial direction by the steering operation mechanism A. Reciprocating motion of the rack shaft 12 changes the steered angle of the steered wheels 3.

The assist mechanism 5 has a torque sensor 21, an electronic control unit (ECU) 16, an electric motor 14, and a worm reduction gear 15. The torque sensor 21 detects the amount of torsion between the input shaft 7a and the output shaft 7b. The ECU 16 determines an assist torque based on a steering torque and a vehicle speed. The steering torque is obtained from the amount of torsion detected by the torque sensor 21. The vehicle speed is detected by a vehicle speed sensor not depicted in the drawings. The ECU 16 drivingly controls the electric motor 14 . The worm reduction gear 15 transmits a rotational force of the electric motor 14 to the output shaft 7b. As a result, the assist torque is applied to the output shaft 7b to assist the driver's steering operation.

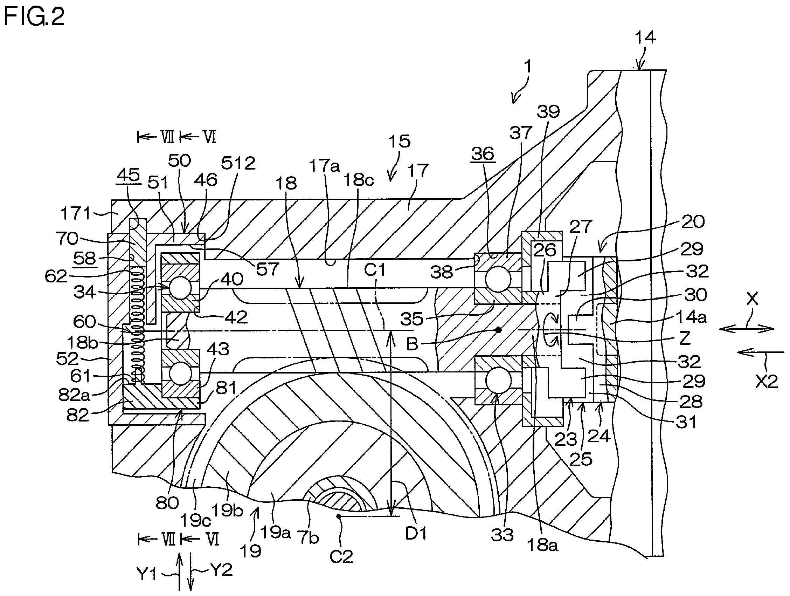

The worm reduction gear 15 in the first embodiment of the invention will be described using FIG. 2. FIG. 2 is a sectional view of an important part of the worm reduction gear 15 in the first embodiment of the invention. The worm reduction gear 15 has a housing 17, a worm shaft 18, a first bearing 33, a second bearing 34, a worm wheel 19, and a bias portion. The worm shaft 18, the first bearing 33, the second bearing 34, the worm wheel 19, and the bias portion are housed in the housing 17.

The worm shaft 18 has a first end 18a and a second end 18b that are separate from each other in the axial direction and a tooth portion 18c positioned midway between the first end 18a and the second end 18b. The worm shaft 18 is housed in a housing portion 17a of the housing 17. The worm shaft 18 is arranged coaxially with an output shaft 14a of the electric motor 14. The first end 18a of the worm shaft 18 faces an end of the output shaft 14a of the electric motor 14 in an axial direction X. The first end 18a of the worm shaft 18 and the output shaft 14a of the electric motor 14 are coupled together via a power transmission coupling 20 so that torque can be transmitted between the first end 18a and the output shaft 14a.

The power transmission coupling 20 has a first rotation element 23, a second rotation element 24, and an intermediate element 25. The first rotation element 23 is fixed to the first end 18a of the worm shaft 18 so as to be rotatable integrally with the worm shaft 18. The second rotation element 24 is fixed to an end of the output shaft 14a of the electric motor 14 so as to be rotatable integrally with the output shaft 14a. The first rotation element 23 has a plurality of engaging protrusions 29 protruding toward the second rotation element 24 in an axial direction Y. The engaging protrusions 29 are arranged in a rotating direction Z (corresponding to a circumferential direction) at intervals in the rotating direction Z. The second rotation element 24 has a plurality of engaging protrusions 30 protruding toward the first rotation element 23 in the axial direction X. The engaging protrusions 30 are arranged in the rotating direction Z (corresponding to the circumferential direction) at intervals in the rotating direction Z. The engaging protrusions 29 of the first rotation element 23 and the engaging protrusions 30 of the second rotation element 24 are alternately arranged at intervals in the rotating direction Z.

The intermediate element 25 includes a plurality of engaging protrusions 32 extending radially outward. Each of the engaging protrusions 32 is arranged between the corresponding engaging protrusion 29 of the first rotation element 23 and the corresponding engaging protrusion 30 of the second rotation element 24 in the rotating direction Z. Thus, a torque of the output shaft 14a of the electric motor 14 is transmitted to the worm shaft 18 via the second rotation element 24, the intermediate element 25, and the first rotation element 23. In addition, the intermediate element 25 is formed of an elastic member. Consequently, the first rotation element 23 is configured to be able to swing with respect to the second rotation element 24. That is, the worm shaft 18 is coupled to the output shaft 14a of the electric motor 14 so as to be able to swing.

The worm wheel 19 has a core portion 19a and a tooth portion 19b. The core portion 19a is formed of, for example, a metal material and has an annular shape. The core portion 19a is fitted over an outer periphery of the output shaft 7b and rotates integrally with the output shaft 7b. The tooth portion 19b is formed of, for example, a resin material and has an annular shape. The invention is not limited to a column assist type electric power steering system in the present embodiment in which the torque of the electric motor 14 is applied to the output shaft 7b, located upstream of the pinion shaft 11. For example, the invention may be applied to a pinion assist type electric power steering system in which the torque of the electric motor 14 is applied to the pinion shaft 11. In this case, the worm wheel 19 is fixed to the pinion shaft 11.

The tooth portion 19b is fitted over an outer periphery of the core portion 19a and rotates integrally with the core portion 19a. On an outer peripheral surface of the tooth portion 19b, teeth 19c are formed which mesh with teeth of the tooth portion 18c of the worm shaft 18. The first bearing 33 includes, for example, a rolling bearing. The first bearing 33 has an inner ring 35, an outer ring 37, and a plurality of rolling elements. The inner ring 35 is fitted over an outer periphery of the first end 18a of the worm shaft 18 and rotates integrally with the worm shaft 18. The outer ring 37 is fitted in a bearing hole 36 formed in the housing 17. The outer ring 37 is sandwiched, in the axial direction, between a positioning step portion 38 located at an end of the bearing hole 36 and a stopper member 39 screw-threaded in the bearing hole 36. The first bearing 33 has an internal clearance.

In the present embodiment, the intermediate element 25 of the power transmission coupling 20 is formed of an elastic member, and slight clearances are set between each of the rolling elements and the inner ring 35 and the outer ring 37. Thus, the worm shaft 18 is supported with a center B of the first bearing 33 serving as a support, so as to be able to swing with respect to the housing 17. The second bearing 34 includes, for example, a rolling bearing. The second bearing 34 has an inner ring 40, an outer ring 43, and a plurality of rolling elements. The second bearing 34 is housed in a holding hole 44 in the housing 17. The inner ring 40 is fitted over the second end 18b of the worm shaft 18 and rotates integrally with the worm shaft 18. One end face of the inner ring 40 is in abutting contact with a positioning step portion 42 formed at the second end 18b of the worm shaft 18.

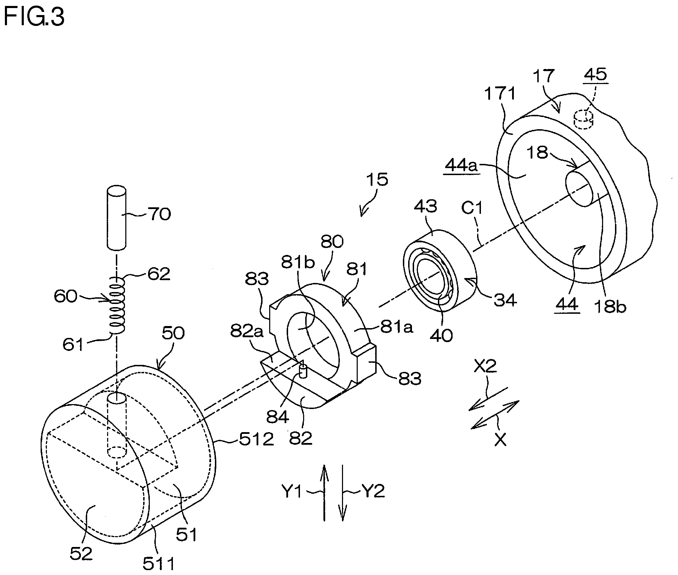

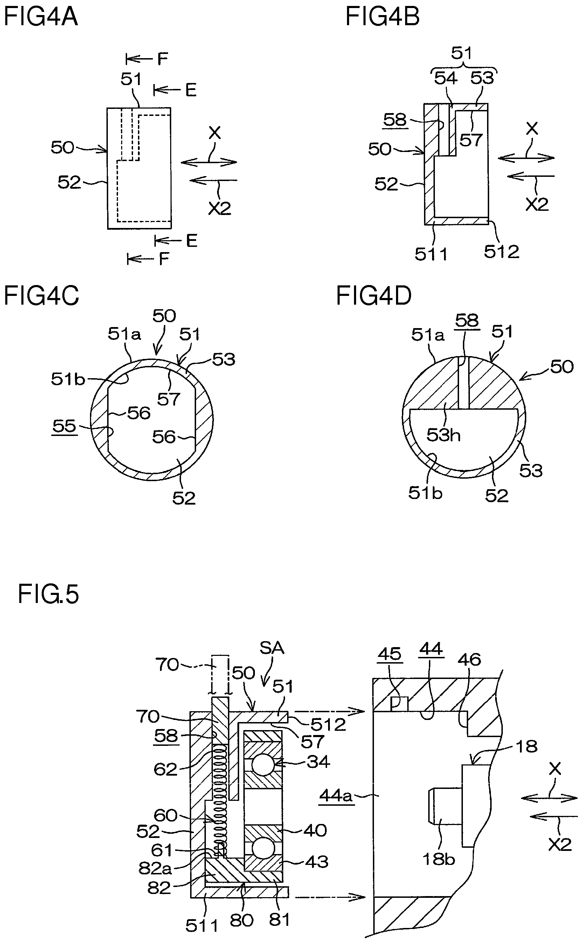

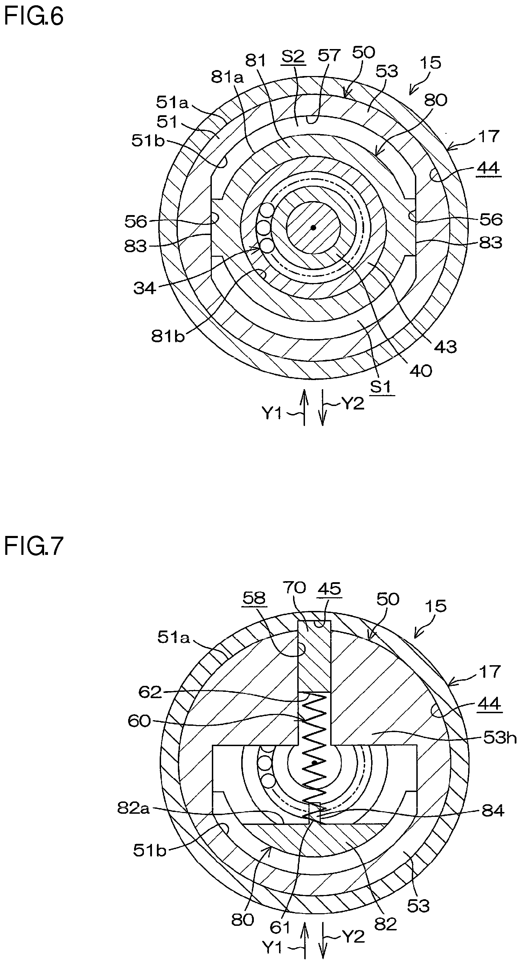

The bias portion of the worm reduction gear 15 in the first embodiment of the invention will be described using FIGS. 3 to 7. FIG. 3 is an exploded perspective view of an important portion of the worm reduction gear 15 in the first embodiment. FIG. 4A is a side view of a guide member in the first embodiment. FIG. 4B is a sectional view of the guide member in the first embodiment. FIG. 4C is a sectional view taken along line E-E in FIG. 4A. FIG. 4D is a sectional view taken along line F-F in FIG. 4A. FIG. 5 is a schematic sectional view of the worm reduction gear 15 during an assembly process. FIG. 6 is a sectional view taken along line VI-VI in FIG. 2. FIG. 7 is a sectional view taken along line VII-VII in FIG. 2.

As depicted in FIG. 2, the bias portion of the first embodiment includes a guide member 50, a bias member 60, a bearing holder 80 providing a receiving-seat forming member, and a spacer 70. The bearing holder 80 and the guide member 50 are arranged around the second bearing 34. The bearing holder 80 is arranged around the second bearing 34. The guide member 50 is arranged around the bearing holder 80. The guide member 50 guides movement of the second end 18b of the worm shaft 18 via the bearing holder 80 and the second bearing 34.

The bias member 60 is formed of a spring member, for example, a compression coil spring. To make the worm shaft 18 closer to the worm wheel 19, the bias member 60 biases the second end 18b of the worm shaft 18 toward the worm wheel 19 with respect to the housing 17 via the bearing holder 80 and the second bearing 34, using the center B of the first bearing 33 serving as a support. The spacer 70 is used to change a set length of the spring member serving as the bias member 60.

In the housing 17, the holding hole 44 is formed which is a through-hole extending in the axial direction X and communicating with the housing portion 17a. The guide member 50, the bearing holder 80, and the second bearing 34 are housed in the holding hole 44. As depicted in FIG. 3, an end 171 of the housing 17 (corresponding to an end on the opposite side of the housing 17 from the electric motor 14 in the axial direction X) is open via an opening 44a of the holding hole 44 located at one end thereof.

As depicted in FIG. 5, the guide member 50, the bearing holder 80 (receiving-seat forming member), the bias member 60, the spacer 70, and the second bearing 34, are assembled into the housing 17 through the opening 44a of the holding hole 44. The guide member 50, the bearing holder 80 (receiving-seat forming member), the bias member 60, the spacer 70, and the second bearing 34 are assembled together into a subassembly SA.

The guide member 50 is press-fitted and fixed in the holding hole 44. As depicted in FIG. 2, the guide member 50 functions as an end cover that closes the end 171 (the opening 44a of the holding hole 44) of the housing 17. As depicted in FIG. 2 and FIG. 3, the bearing holder 80 functioning as the receiving-seat forming member includes an annular main body portion 81 and a receiving-seat forming portion 82. The bearing holder 80 is formed of a resin material such as polyamide. The outer ring 43 of the second bearing 34 is press-fitted to an inner periphery 81b of the main body portion 81 of the bearing holder 80. A pair of guided portions 83 is provided on an outer periphery 81a of the main body portion 81. The guided portions 83 are formed like flat surfaces that are parallel to a first direction Y1 and a second direction Y2.

The receiving-seat forming portion 82 forms a receiving seat 82a on which a first end 61 of the bias member 60 is seated. The receiving seat 82a is arranged on an outer side X2 of at least one of the second end 18b of the worm shaft 18 and the second bearing 34 in the axial direction. The bearing holder 80, which includes the receiving-seat forming portion 82, is integrated with the outer ring 43 of the second bearing 34 by being assembled with the outer ring 43.

The receiving seat 82a is provided with a guide 84 such as a spring guide that is a protruding portion. The guide 84, which is a protruding portion, is inserted into the first end 61 of the bias member 60. As the guide 84, a recessed portion that houses the first end 61 of the bias member 60 may be formed in the receiving seat 82a (not depicted in the drawings). The guide member 50 is formed of a resin material such as polyamide or a metal material.

As depicted in FIGS. 4A to 4D, the guide member 50 includes a ring portion 51 and a closing portion 52. As depicted in FIG. 6, the ring portion 51 is fitted in the holding hole 44 in the housing 17 to guide movement of the second end 18b of the worm shaft 18. As depicted in FIG. 4B, the closing portion 52 closes one end 511 of the ring portion 51 (corresponding to an end of the guide member 50). As depicted in FIG. 2, the closing portion 52 closes the opening 44a of the holding hole 44. The other end 512 of the guide member 50 is open.

As depicted in FIG. 4B, the ring portion 51 includes an outer periphery 51a and an inner periphery 51b. The outer periphery 51a of the ring portion 51 is press-fitted to an inner periphery of the holding hole 44 as depicted in FIG. 6 and FIG. 7. As depicted in FIG. 4B, the ring portion 51 includes a first portion 53 and a second portion 54 in the axial direction X. The first portion 53 is arranged closer to the electric motor 14 in the axial direction X. The second portion 54 is arranged further from the electric motor 14 (more toward the outer side X2 of the worm shaft 18) than the first portion 53 in the axial direction X.

FIG. 4C depicts a section of the first portion 53 of the ring portion 51. As depicted in FIG. 4C and FIG. 6, the inner periphery 51b of the first portion 53 of the ring portion 51 defines a guide hole 55 serving as a guide space through which the bearing holder 80 is guided. The guide hole 55 is formed like a bias hole in which the bearing holder 80 is held so as to make the second end 18b of the worm shaft 18 movable in the first direction Y1 and in the second direction Y2.

As depicted in FIG. 2, the first direction Y1 is such a direction that a center-to-center distance D1 between the worm shaft 18 and the worm wheel 19 (corresponding to a distance between a central axis C1 of the worm shaft 18 and a central axis C2 of the worm wheel 19) increases. The second direction Y2 is such a direction that the center-to-center distance D1 between the worm shaft 18 and the worm wheel 19 decreases. The second direction Y2 corresponds to a biasing direction of the bias member 60. The first direction Y1 corresponds to a direction opposite to the biasing direction of the bias member 60.

As depicted in FIG. 4C and FIG. 6, the guide member 50 includes a pair of guiding portions 56. The guiding portions 56 are provided on the inner periphery 51b (corresponding to an inner periphery of the guide hole 55) of the first portion 53 of the ring portion 51. The guiding portions 56 include a pair of flat surfaces extending in the first direction Y1 and the second direction Y2 and parallel to each other. As depicted in FIG. 6, the guiding portions 56 contact the guided portions 83 of the bearing holder 80 to provide a first function, a second function, and a third function described below. The first function is a function to guide movement of the second bearing 34 in the first direction Y1 and in the second direction Y2. The second function is a function to regulate movement of the second bearing 34 in a direction orthogonal to the first direction Y1 and the second direction Y2. The third function is a function to regulate rotation of the outer ring 43 of the second bearing 34.

On an inner surface of the guide member 50 (the inner periphery 51b of the first portion 53 of the ring portion 51), a clearance S1 is defined between a portion of the inner surface that is close to the worm wheel 19 and the outer periphery 81a of the main body portion 81 of the bearing holder 80. The clearance S1 allows the worm shaft 18 to be constantly biased toward the worm wheel 19, even if the tooth portion 19b of the worm wheel 19 is worn off, for example.

The guide member 50 includes a stopper portion 57 that regulates a distance that the second end 18b of the worm shaft 18 moves away from the worm wheel 19 (in the first direction Y1). The stopper portion 57 is provided on the inner periphery 51b of the first portion 53 of the ring portion 51 at an end thereof on the first direction Y1 side. Normally, a clearance S2 is defined in the first direction Y1 between the stopper portion 57 and the outer periphery 81a of the main body portion 81 of the bearing holder 80. When the vehicle travels on a rough road, for example, the abutting contact between the stopper portion 57 and the main body portion 81 of the bearing holder 80 regulates excessive movement of the second end 18b of the worm shaft 18 in the first direction Y1.

As depicted in FIG. 4D and FIG. 7, the inner periphery 51b includes a projecting portion 53h located on the second portion 54 of the ring portion 51 of the guide member 50 and projecting inward. An insertion hole 58 is formed in the projecting portion 53h so as to allow the bias member 60 and the spacer 70 to be inserted through and held in the insertion hole 58. As depicted in FIG. 2, a holding recessed portion 45 recessed in the first direction Y1 is formed in the inner periphery of the holding hole 44 of the housing 17. A circumferential position of the guide member 50 with respect to the holding hole 44 is determined so that the holding recessed portion 45 in the housing 17 communicates with the insertion hole 58 in the guide member 50.

The spacer 70 inserted through and held in the insertion hole 58 in the guide member 50 is, for example, a pin. The spacer 70 is interposed between the bottom of the holding hole 44 of the housing 17 and a second end 62 of the bias member 60. The spacer 70 is held in series with the bias member 60 by the guide member 50. Appropriate selection from spacers 70 with different lengths for use enables a change in the set length of the spring member serving as the bias member 60.

In the subassembly SA depicted in FIG. 5, when the bias member 60 is in a free state, a part of the spacer 70 held in the insertion hole 58 in the guide member 50 protrudes from the outer periphery 51a of the ring portion 51 of the guide member 50 as depicted by a long dashed double-short dashed line in FIG. 5. The spacer 70 has been pushed in the insertion hole 58 so as not to obstruct assembly of the subassembly SA into the holding hole 44. As depicted by a continuous line in FIG. 5, the spacer 70 is inhibited from protruding out from the outer periphery 51a of the ring portion 51.

As depicted in FIG. 2, the housing 17 includes a positioning portion 46 that positions the guide member 50 in the axial direction X of the worm shaft 18. The positioning portion 46 is, for example, a step portion formed on the inner periphery of the holding hole 44. The positioning portion 46 comes into abutting contact with the other end 512 of the ring portion 51 of the guide member 50 to position the guide member 50 in the axial direction X. In the first embodiment, during assembly, the ring portion 51 of the guide member 50 can be fitted into the holding hole 44 by being assembled into the holding hole 44 through the opening 44a. The assembly can be carried out through the end 171 of the housing 17, which has the opening 44a, so that the worm reduction gear can be more easily and efficiently assembled. The opening 44a at the end 171 of the housing 17 can be closed by the closing portion 52, provided at an end of the ring portion 51 fitted in the holding hole 44. This eliminates the need for a separate end cover that closes the opening 44a at the end 171 of the housing 17. Therefore, an increase in the number of components can be suppressed.

An electric power steering system can thus be implemented which is more easily and efficiently assembled and which suppresses an increase in the number of components. The guide member 50 is formed of resin. Therefore, possible rattle can be suppressed which results from contact between the guide member 50 and another member (for example, the bearing holder 80). The guide member 50 includes the stopper portion 57 that regulates a distance that the second end 18b moves away from the worm wheel 19 (in the first direction Y1). This allows suppression of degradation of the bias member 60 and thus of the worm wheel 19.

The set length of the spring member serving as the bias member 60 can be changed by the spacer 70 held in series with the bias member 60 by the guide member 50. Thus, a load on the spring member can be easily adjusted. The bias member 60 is adjacent to at least one of the second end 18b of the worm shaft 18 and the second bearing 34 in the axial direction X. The bias member 60 biases the receiving seat 82a of the receiving-seat forming portion 82 integrated with the outer ring 43 of the second bearing 34, toward the worm wheel 19. This allows the worm reduction gear to be more easily and efficiently mounted in a vehicle or the like, while suppressing a loss torque.

During assembly, the guide member 50, the bearing holder 80 (receiving-seat forming member), the bias member 60, the spacer 70, and the second bearing 34 can be integrally assembled into the holding hole 44 as the subassembly SA, as depicted in FIG. 5. This allows the worm reduction gear to be more easily and efficiently assembled. Alternatively, the subassembly SA may be configured to include the guide member 50, the bearing holder 80 (receiving-seat forming member), and the bias member 60 while excluding at least one of the second bearing 34 and the spacer 70.

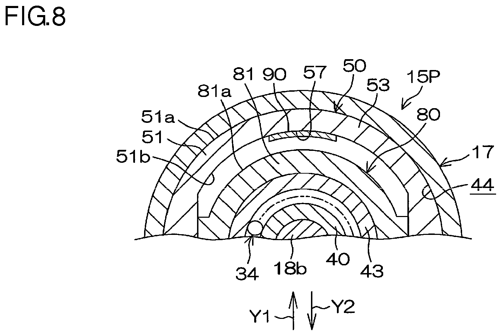

The guide member 50 includes the guiding portions 56. The guiding portions 56 allows the second end 18b of the worm shaft 18 to be smoothly guided via the bearing holder 80, which holds the second bearing 34. In the present embodiment, when the guide member 50 is formed of a metal member, the bearing holder 80 is preferably formed of a resin material in order to suppress possible rattle resulting from contact. FIG. 8 is a sectional view of an important part of a worm reduction gear in a second embodiment of the invention. A worm reduction gear 15P in the second embodiment in FIG. 8 is different from the worm reduction gear 15 in the first embodiment in FIG. 6 mainly in that an elastic body 90 for sound absorption is fixed to the stopper portion 57 of the guide member 50.

The elastic body 90 is formed of a rubber material or a resin material and has a plate shape, for example. When the stopper portion 57 receives a collision of the main body portion 81 of the bearing holder 80, for example, during traveling on a rough road, the elastic body 90 relaxes the impact of the collision, suppressing the contact rattle. Provision of the elastic body 90 enables the contact rattle to be suppressed without the need to strictly set the dimensional or assembly accuracy of the guide member 50 and the bearing holder 80.

The elastic body 90 may be attached to at least one of the stopper portion 57 and a portion of the outer periphery 81a of the main body portion 81 of the bearing holder 80, which portion faces the stopper portion 57, to suppress the contact rattle resulting from a collision between the stopper portion 57 and the portion facing the stopper portion 57. The invention is not limited to the above-described embodiments. For example, the electric power steering system 1 may be an electric power steering system that applies power of the electric motor 14 to the pinion shaft 11.

## Claims

1. A worm reduction gear comprising:
a housing (17) in which a holding hole (44) with an opening at one end of the holding hole (44) is formed;
a worm shaft (18) including a first end (18a) coupled to an electric motor (14) and a second end (18b) positioned on the opposite side of the worm shaft (18) from the first end (18a) in an axial direction, the worm shaft (18) being housed in the housing (17);
a worm wheel (19) that meshes with the worm shaft (18);
a first bearing (33) held by the housing (17) and supporting the first end (18a) such that the first end (18a) is rotatable;
a second bearing (34) that supports the second end (34) such that the second end (34) is rotatable; and
a bias member (60) that directly or indirectly biases the second end (18b) in such a direction that the second end (18b) approaches the worm wheel (19); **characterized by**
a guide member (50) including a ring portion (51) fitted in the holding hole (44) in the housing (17) to guide movement of the second end (18b) of the worm shaft (18) and a closing portion (52) that closes an end of the ring portion (51) and the opening of the holding hole (44).

2. The worm reduction gear according to claim 1, wherein the guide member (50) is formed of resin.

3. The worm reduction gear according to claim 1 or 2, wherein the guide member (50) includes a stopper portion (57) that regulates a distance that the second end (18b) moves away from the worm wheel (19).

4. The worm reduction gear according to any one of claims 1 to 3, further comprising:
a spacer (70) held in series with the bias member (60) by the guide member (50) to allow a change in a set length of a spring member serving as the bias member (60).

5. The worm reduction gear according to any one of claims 1 to 4, further comprising:
a receiving-seat forming member (80) forming a receiving seat arranged on an outer side of at least one of the second end (18b) and the second bearing (34) in the axial direction, the receiving-seat forming member (80) being integrated with an outer ring (43) of the second bearing (34), wherein
the bias member (60) is arranged adjacently to at least one of the second end (18b) and the second bearing (34) in the axial direction and between the housing (17) and the receiving seat to bias the second end (18b) via the receiving-seat forming member (80) and the second bearing (34) in such a direction that the second end (18b) approaches the worm wheel (19).

6. The worm reduction gear according to claim 5, wherein a subassembly (SA) is formed to include the guide member (50), the receiving-seat forming member (80), and the bias member (60).

7. The worm reduction gear according to any one of claims 1 to 6, further comprising:
a bearing holder (80) that surrounds the outer ring (43) of the second bearing (34) to hold the second bearing (34), wherein
the guide member (50) includes a guiding portion (56) that guides movement of the second end (18b) of the worm shaft (18) via the bearing holder (80).

8. An electric power steering system that transmits power of an electric motor (14) to a steering shaft via the worm reduction gear according to any one of claims 1 to 7.

## Patentansprüche

1. Schneckenreduktionsgetriebe mit:
einem Gehäuse (17), in dem ein Halteloch (44) mit einer Öffnung an einem Ende des Haltelochs (44) ausgebildet ist;
einer Schneckenwelle (18), die ein erstes Ende (18a), das mit einem Elektromotor (14) gekoppelt ist, und ein zweites Ende (18b) aufweist, das in einer Axialrichtung an der dem ersten Ende (18a) entgegengesetzten Seite der Schneckenwelle (18) positioniert ist, wobei die Schneckenwelle (18) im Gehäuse (17) untergebracht ist;
einem Schneckenrad (19), das mit der Schneckenwelle (18) im Eingriff steht;
einem ersten Lager (33), das vom Gehäuse (17) gehalten ist und das erste Ende (18a) unterstützt, sodass das erste Ende (18a) drehbar ist;
einem zweiten Lager (34), das das zweite Ende (34) unterstützt, sodass das zweite Ende (34) drehbar ist; und
einem Vorspannelement (60), das das zweite Ende (18b) in einer derartigen Richtung direkt oder indirekt vorspannt, dass sich das zweite Ende (18b) dem Schneckenrad (19) nähert; **gekennzeichnet durch**
ein Führungselement (50), das einen Ringabschnitt (51), welcher im Gehäuse (17) in dem Halteloch (44) eingepasst ist, um eine Bewegung des zweiten Endes (18b) der Schneckenwelle (18) zu führen, und einen Schließabschnitt (52) aufweist, welcher ein Ende des Ringabschnitts (51) und die Öffnung des Haltelochs (44) schließt.

2. Schneckenreduktionsgetriebe nach Anspruch 1, wobei das Führungselement (50) aus Harz gebildet ist.

3. Schneckenreduktionsgetriebe nach Anspruch 1 oder 2, wobei das Führungselement (50) einen Stoppabschnitt (57) aufweist, welcher einen Abstand reguliert, über den sich das zweite Ende (18b) vom Schneckenrad (19) wegbewegt.

4. Schneckenreduktionsgetriebe nach einem der Ansprüche 1 bis 3, ferner mit:
einem Abstandhalter (70), der in Reihe mit dem Vorspannelement (60) vom Führungselement (50) gehalten ist, sodass eine Veränderung einer bestimmten Länge eines als das Vorspannelement (60) fungierenden Federelements ermöglicht wird.

5. Schneckenreduktionsgetriebe nach einem der Ansprüche 1 bis 4, ferner mit:
einem Aufnahmesitzformelement (80), das einen Aufnahmesitz bildet, welcher in Axialrichtung auf einer Außenseite des zweiten Endes (18b) und/oder des zweiten Lagers (34) angeordnet ist, wobei das Aufnahmesitzformelement (80) mit einem Außenring (43) des zweiten Lagers (34) integriert ist, wobei
das Vorspannelement (60) in Axialrichtung angrenzend an das zweite Ende (18b) und/oder das zweite Lager (34) und zwischen dem Gehäuse (17) und dem Aufnahmesitz angeordnet ist, um über das Aufnahmesitzformelement (80) und das zweite Lager (34) das zweite Ende (18b) in einer derartigen Richtung vorzuspannen, dass sich das zweite Ende (18b) dem Schneckenrad (19) nähert.

6. Schneckenreduktionsgetriebe nach Anspruch 5, wobei eine Baugruppe (SA) ausgebildet ist, das Führungselement (50), das Aufhahmesitzformelement (80) und das Vorspannelement (60) aufzuweisen.

7. Schneckenreduktionsgetriebe nach einem der Ansprüche 1 bis 6, ferner mit:
einem Lagerhalter (80), der den Außenring (43) des zweiten Lagers (34) so umgibt, das zweite Lager (34) zu halten, wobei
das Führungselement (50), das einen Führungsabschnitt (56) aufweist, welcher über den Lagerhalter (80) eine Bewegung des zweiten Endes (18b) der Schneckenwelle (18) führt.

8. Elektrotrisches Servolenksystem, das über das Schneckenreduktionsgetriebe nach einem der Ansprüche 1 bis 7 auf eine Lenkwelle Leistung eines Elektromotors (14) überträgt.

## Revendications

1. Engrenage de réduction à vis sans fin comprenant :
un logement (17) dans lequel est formé un trou de maintien (44) avec une ouverture à une extrémité du trou de maintien (44) ;
un arbre à vis sans fin (18) comportant une première extrémité (18a) couplée à un moteur électrique (14) et une seconde extrémité (18b) positionnée sur un côté de l'arbre à vis sans fin (18) opposé à la première extrémité (18a) dans une direction axiale, l'arbre à vis sans fin (18) étant logé dans le logement (17) ;
une roue à vis sans fin (19) qui s'engrène dans l'arbre à vis sans fin (18) ;
un premier palier (33) maintenu par le logement (17) et supportant la première extrémité (18a) de telle sorte que la première extrémité (18a) est rotative ;
un second palier (34) qui supporte la seconde extrémité (34) de telle sorte que la seconde extrémité (34) est rotative ; et
un élément de contrainte (60) qui contraint directement ou indirectement la seconde extrémité (18b) dans une direction telle que la seconde extrémité (18b) se rapproche de la roue à vis sans fin (19) ; **caractérisé par**
un élément de guidage (50) comportant une partie annulaire (51) placé dans le trou de maintien (44) du logement (17) pour guider le mouvement de la seconde extrémité (18b) de l'arbre à vis sans fin (18) et une partie de fermeture (52) qui ferme une extrémité de la partie annulaire (51) et l'ouverture du trou de maintien (44).

2. Engrenage de réduction à vis sans fin selon la revendication 1, dans lequel l'élément de guidage (50) est constitué de résine.

3. Engrenage de réduction à vis sans fin selon la revendication 1 ou 2, dans lequel l'élément de guidage (50) comporte une partie butoir (57) qui régule une distance de laquelle la seconde extrémité (18b) s'éloigne de la roue à vis sans fin (19).

4. Engrenage de réduction à vis sans fin selon l'une quelconque des revendications 1 à 3, comprenant en outre :
une entretoise (70) maintenue en série avec l'élément de contrainte (60) par l'élément de guidage (50) pour permettre un changement d'une longueur d'utilisation d'un élément de ressort ayant fonction d'élément de contrainte (60).

5. Engrenage de réduction à vis sans fin selon l'une quelconque des revendications 1 à 4, comprenant en outre :
un élément formant siège de réception (80) formant un siège de réception agencé sur une face externe d'au moins l'un de la seconde extrémité (18b) et du second palier (34) dans la direction axiale, l'élément formant siège de réception (80) incorporant un anneau externe (43) du second palier (34), dans lequel
l'élément de contrainte (60) est agencé de façon adjacente à au moins l'un de la seconde extrémité (18b) et du second palier (34) dans la direction axiale et entre le logement (17) et le siège de réception pour contraindre la seconde extrémité (18b) via l'élément formant siège de réception (80) et le second palier (34) dans une direction telle que la seconde extrémité (18b) se rapproche de la roue à vis sans fin (19).

6. Engrenage de réduction à vis sans fin selon la revendication 5, dans lequel un sous-ensemble (SA) est formé de manière à comporter l'élément de guidage (50), l'élément formant siège de réception (80) et l'élément de contrainte (60).

7. Engrenage de réduction à vis sans fin selon l'une quelconque des revendications 1 à 6, comprenant en outre :
un support de palier (80) qui entoure l'anneau externe (43) du second palier (34) pour maintenir le second palier (34), dans lequel
l'élément de guidage (50) comporte une partie de guidage (56) qui guide le mouvement de la seconde extrémité (18b) de l'arbre à vis sans fin (18) via le support de palier (80).

8. Système de direction à assistance électrique qui transmet la puissance d'un moteur électrique (14) à un arbre de direction via l'engrenage de réduction à vis sans fin selon l'une quelconque des revendications 1 à 7.
